# EUROPEAN PATENT APPLICATION

(11) **EP 4 054 121 A2**
(43) Date of publication of application: **07.09.2022**
(21) Application number: 22174831.2
(22) Date of filing: 23.05.2022
(51) Int. Cl.: H04L 9/40

(54) **METHOD AND APPARATUS FOR PROCESSING INFORMATION**

(30) Priority: 03.09.2021 CN 202111031247
(71) Applicant: Beijing Baidu Netcom Science and Technology Co., Ltd., Beijing 100085 (CN)
(72) Inventor: XU, Yumin, Beijing, 100085 (CN)
(74) Representative: V.O.

(57) **Abstract**

The present disclosure provides a method and apparatus for processing information, and relates to the fields of cloud computing technology and other technologies. A specific implementation comprises: allocating a virtualized instance based on a received information verification request; generating an initial video stream containing a virtualized input interface in the virtualized instance based on the information verification request, and sending the initial video stream to a client side to display the virtualized input interface at the client side; obtaining, in response to receiving operation event information being in the virtualized input interface and sent by the client side, an updated video stream based on the operation event information, and sending the updated video stream to the client side; and analyzing and verifying, in response to determining that an operation event corresponding to the operation event information is completed, the operation event information to obtain a verification result. This implementation improves the security of the information processing.

## Description

### TECHNICAL FIELD

The present disclosure relates to the field of computer technology, specifically to the fields of cloud computing technology and other technologies, and particularly to a method and apparatus for processing information, an electronic device, a computer readable medium and a computer program product.

### BACKGROUND

In daily life, people often need to input private information such as an account number, a password, personal information and an authentication code on terminals and PCs.

Generally, people use an encryption control to ensure the security of the inputted information. However, through the technologies such as the encryption control, there is still a risk that the inputted information could be intercepted.

### SUMMARY

A method and apparatus for processing information, an electronic device, a computer readable medium and a computer program product are provided.

In a first aspect, embodiments of the present disclosure provide a method for processing information, comprising: allocating a virtualized instance based on a received information verification request; generating an initial video stream containing a virtualized input interface in the virtualized instance based on the information verification request; sending the initial video stream to a client side to display the virtualized input interface at the client side; obtaining, in response to receiving operation event information being in the virtualized input interface and sent by the client side, an updated video stream based on the operation event information, and sending the updated video stream to the client side; and analyzing and verifying, in response to determining that an operation event corresponding to the operation event information is completed, the operation event information to obtain a verification result.

In a second aspect, embodiments of the present disclosure provide another method for processing information, comprising: receiving an initial video stream containing a virtualized input interface; decoding the initial video stream to obtain and display the virtualized input interface; sending, in response to receiving an operation on the virtualized input interface, operation event information corresponding to the operation to a cloud side; receiving an updated video stream; decoding the updated video stream to obtain and display an interface corresponding to the updated video stream; and receiving, in response to determining that the operation is completed, a verification result after a verification performed by the cloud side on the operation event information.

In a third aspect, embodiments of the present disclosure provide an apparatus for processing information, comprising: an allocating unit, configured to allocate a virtualized instance based on a received information verification request; a generating unit, configured to generate an initial video stream containing a virtualized input interface in the virtualized instance based on the information verification request; a sending unit, configured to send the initial video stream to a client side to display the virtualized input interface at the client side; an updating unit, configured to obtain, in response to receiving operation event information being in the virtualized input interface and sent by the client side, an updated video stream based on the operation event information, and send the updated video stream to the client side; and a verifying unit, configured to analyze and verify, in response to determining that an operation event corresponding to the operation event information is completed, the operation event information to obtain a verification result.

In a fourth aspect, embodiments of the present disclosure provide another apparatus for processing information, comprising: an initial receiving unit, configured to receive an initial video stream containing a virtualized input interface; an initial decoding unit, configured to decode the initial video stream to obtain and display the virtualized input interface; a sending unit, configured to send, in response to receiving an operation on the virtualized input interface, operation event information corresponding to the operation to a cloud side; an update receiving unit, configured to receive an updated video stream; an update decoding unit, configured to decode the updated video stream to obtain and display an interface corresponding to the updated video stream; and a result receiving unit, configured to receive, in response to determining that the operation is completed, a verification result after a verification performed by the cloud side on the operation event information.

In a fifth aspect, embodiments of the present disclosure provide an electronic device, comprising: one or more processors; and a memory, storing one or more programs, wherein the one or more programs, when executed by the one or more processors, cause the one or more processors to implement the method provided by the first aspect or the second aspect.

In a sixth aspect, embodiments of the present disclosure provide a computer-readable medium, storing a computer program thereon, wherein the program, when executed by a processor, causes the processor to implement the method provided by the first aspect or the second aspect.

In a seventh aspect, an embodiment of the present disclosure provides a computer program product, comprising a computer program, wherein the computer program, when executed by a processor, implements the method provided by the first aspect or the second aspect.

According to the method and apparatus for processing information provided in the embodiments of the present disclosure, first, the virtualized instance is allocated based on the received information verification request. Then, the initial video stream containing the virtualized input interface is generated in the virtualized instance based on the information verification request. Subsequently, the initial video stream is sent to the client side to display the virtualized input interface at the client side. Next, in response to receiving the operation event information being in the virtualized input interface and sent by the client side, the updated video stream is obtained based on the operation event information, and the updated video stream is sent to the client side. Finally, in response to determining that the operation event corresponding to the operation event information is completed, the operation event information is analyzed and verified to obtain the verification result. Accordingly, the interaction is performed with the client side in the form of a video stream, to receive the operation event information of the operation of the user on the virtualized input interface, and the operation event information is analyzed and verified, to complete the verification on the information inputted by the user. Thus, it can be ensured that the process of verifying the operation event information of the user can be completely performed at the cloud side, which improves the reliability of the input of the information of the user, and ensures the security of the verification on the information.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

The accompanying drawings are used for a better understanding of the scheme, and do not constitute a limitation to the present disclosure. Here:
Fig. 1 is a flowchart of an embodiment of a method for processing information according to the present disclosure;
Fig. 2 is a schematic diagram of a scenario to which the method for processing information according to the present disclosure is applicable;
Fig. 3 is a flowchart of another embodiment of the method for processing information according to the present disclosure;
Fig. 4 is a schematic structural diagram of an embodiment of an apparatus for processing information according to the present disclosure;
Fig. 5 is a schematic structural diagram of another embodiment of the apparatus for processing information according to the present disclosure; and
Fig. 6 is a block diagram of an electronic device used to implement the method for processing information according to embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

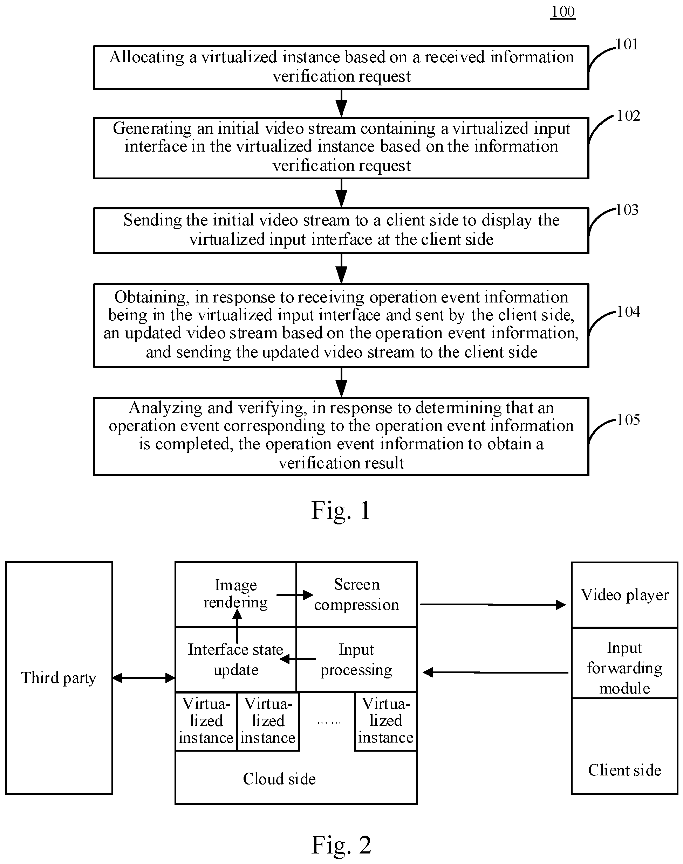

Fig. 1 illustrates a flow 100 of an embodiment of a method for processing information according to the present disclosure. The method for processing information includes the following steps:

Step 101, allocating a virtualized instance based on a received information verification request.

In this embodiment, an executing body on which the method for processing information runs may be a cloud server. A plurality of virtualized instances are distributed and stored on the cloud server. A virtualized instance may be a virtualized device composed of allocated resources including a CPU, a memory, a storage device, and the like. When there is an information verification requirement on an object, a client side or a webpage, the information verification request is sent to the cloud server through the client side or a local server side. The cloud server selects one or more virtualized instances from a plurality of virtualized devices based on the received information verification request, and allocates the selected virtualized instances to the client side or a traditional server side, to cause the selected virtualized instances to provide a virtual service for the client side or the traditional server side. In this embodiment, the client side is a terminal distinguished from a cloud terminal. The cloud terminal refers to a terminal device of a cloud desktop technology, and the client side is a terminal communicating with a traditional server via the Internet or the like.

In this embodiment, the virtualized instance (e.g., a cloud mobile phone or a cloud desktop) is a desktop instance (e.g., an Android instance and a linux instance) virtualized on the cloud server based on the cloud server and the virtualization technology. Image rendering and processing are performed on the information related to the virtualized instance at a cloud server side (hereinafter referred to as a cloud side), and the related information is presented at the client side. The client side receives operation information of an operation performed by the object on the virtualized input interface in the virtualized instance, and transmits the operation information to the cloud side, to cause the cloud side to further process the operation information.

In this embodiment, the information verification request is a verification request generated based on the information verification information of the client side or the traditional server side, and the information verification request may be sent and obtained through the interface of the client side or the traditional server side. The information verification request may include: an identifier of a request issuing side, a type of to-be-verified data (image data, sound data, and the like), a start position of the to-be-verified data, an end position of the to-be-verified data, a verification approach type (a digital comparison and image matching), a type of a virtualized input interface corresponding to the type of the to-be-verified data, and the like. Here, after obtaining the information verification request, the executing body on which the method for processing information runs may determine, based on the information verification request, the type of the data required to be verified, and further determine the type, appearance, etc. of a to-be-generated virtualized input interface based on the type of the data required to be verified.

The executing body on which the method for processing information runs may receive and obtain the information verification request in various ways. As an example, the executing body communicates with the client side to receive an information verification request sent in real time by a client side terminal. As another example, the executing body communicates with a local server in real time to obtain an information verification request sent by the local server.

In this embodiment, the object may refer to one or more users, and each user may rent at least one virtualized instance. After renting the virtualized instance, the user may perform a remote operation on the virtualized instance through the client side, to control the virtualized instance, an application of the virtualized instance, a generation interface of the virtualized instance, or the like.

Step 102, generating an initial video stream containing a virtualized input interface in the virtualized instance based on the information verification request.

In this embodiment, the information verification request may include a type of the virtualized input interface, the identifier of the request issuing side, control information on the virtualized input interface, and the like. The type and style of the generated virtualized input interface and the control on the virtualized input interface may be different based on the content of the information verification request.

As an example, the information verification request may include an identifier of the traditional server, a length and width of a virtual interface, prompt information, an information input box, and the like. After receiving the information verification request, the executing body on which the method for processing information runs determines that the request is sent by the traditional server, allocates a virtualized instance to the traditional server, and generates, in the virtualized instance, a virtualized interface defined by the length and width of the above virtual interface and the prompt information. Moreover, the executing body sets the information input box on the virtualized input interface, thus generating the virtualized input interface, and compresses an image corresponding to the generated virtualized input interface into the initial video stream, and sends the initial video stream to the client side to display the generated virtualized input interface at the client side, which helps the user perform the remote operation on the virtualized input interface.

Alternatively, a default virtualized input interface parameter may be set for a different type of to-be-verified information. When the information verification request includes the default virtualized input interface parameter, the virtualized input interface corresponding to the default virtualized input interface parameter is directly generated. Further, the information verification request may further include the prompt information. The prompt information is directly displayed on the virtualized input interface to prompt the object operating on the virtualized input interface. For example, the prompt information is: please input a password. Alternatively, the prompt information is: please check the image.

Step 103, sending the initial video stream to a client side to display the virtualized input interface at the client side.

In this embodiment, the client side has a video player function (as shown in Fig. 2). When receiving the initial video stream sent by the executing body, the client side displays the virtualized input interface in the initial video stream, so as to display the remote content locally, which helps the object perform the remote operation on the virtualized input interface. When the object performs the operation on the virtualized input interface, the client side feeds back, in real time, the operation event information of the object to the executing body on which the method for processing information runs, and the executing body analyzes the operation event information.

In this embodiment, the operation corresponding to the operation event information may include: an operation for a control, information inputting, virtual input interface beautifying, and the like.

Step 104, obtaining, in response to receiving operation event information being in the virtualized input interface and sent by the client side, an updated video stream based on the operation event information, and sending the updated video stream to the client side.

In this embodiment, the operation event information is event information obtained after an operation is performed on different controls or components on the virtualized input interface. As an example, a button is displayed on the virtualized input interface, and a click of the object on the button is a click event. The information of the click event may include: a click position, a click start time, a click end time, and the like.

As another example, the information input box is displayed on the virtualized input interface. The object inputs a text into the information input box, and the inputting of the text into the information input box by the object is an input event. The operation event information corresponding to the input event includes: an input box identifier, an input start position, an input end position, and inputted information (a password and an authentication code) captured by the input box.

In this embodiment, the operation event information may refer to continuous event information. In order to ensure that the object can observe the effect of the operation on the virtualized input interface, the executing body on which the method for processing information runs may display, for the operation event information, the change of the operation on the virtualized input interface in real time after the operation change corresponding to the operation event information, thereby realizing the display effect of the local operation input interface.

Alternatively, the operation event information includes: an operation prompt text in a first operation time and an operation result text in a second operation time. Obtaining the updated video stream based on the operation event information and sending the updated video stream to the client side includes: adding, in a first display time, the operation prompt text to a corresponding position of the virtualized input interface, and performing image rendering to generate a plurality of frames of images including the operation prompt text; compressing the plurality of frames of images to obtain a first updated video stream, and sending the first updated video stream to the client side; adding, in a second display time, the operation result text to a corresponding position of the virtualized input interface, and performing image rendering to generate a plurality of frames of images including the operation result text; compressing the plurality of frames of images to obtain a second updated video stream, and sending the second updated video stream to the client side. It should be noted that the first operation time and the second operation time may be overlapped time periods in a period during which the object performs the remote operation on the virtualized input interface, or may be time points having a sequential relationship. The first display time and the second display time may be overlapped time periods in a period during which the virtualized input interface is displayed, or may be time points having a sequential relationship.

Step 105, analyzing and verifying, in response to determining that an operation event corresponding to the operation event information is completed, the operation event information to obtain a verification result.

In this embodiment, the operation event information may include an operation end position. When detecting the operation end position in the operation event information, the executing body on which the method for processing information runs determines that the operation event corresponding to the operation event information is completed (i.e., the event corresponding to the operation event information is ended), analyzes the entire operation event information, and verifies the analyzed operation event information.

Alternatively, it is also possible to detect whether the operation event information includes a preset number of bits of characters in the same form. In response to determining that the operation event information includes the preset number of bits of characters in the same form, as an example, the operation event information includes password input event information. When detects that the operation event information has eight bits of characters in the same form, the executing body determines that the operation event corresponding to the operation event information is completed, and analyzes and verifies the operation event information.

Alternatively, the information verification request may include an operation completion time. When the current time is the same as the operation completion time or the current time is greater than the operation completion time, it is determined that the operation event corresponding to the operation event information is completed, the entire operation event information is analyzed, and the analyzed operation event information is verified.

As shown in Fig. 2, a cloud side has a plurality of virtualized instances. After receiving an information verification request sent by a client side, the cloud side allocates the virtualized instances to the client side, generates a virtualized input interface in the virtualized instances, obtains an initial video stream through image rendering and a screen compression based on the virtualized input interface, and plays the initial video stream at the client side. The virtualized input interface may be mapped to the client side. An object may perform a remote operation on the virtualized input interface in the client side. The cloud side analyzes operation event information fed back by the client side, and verifies the analyzed operation event information to obtain a verification result. Further, for the inputted information of the object, an input forwarding module of the client side may convert the inputted information into the operation event information. The cloud side performs input processing based on the operation event information, obtains an updated video stream through an interface state update, the image rendering and the screen compression, and plays the updated video stream in the player of the client side, thereby achieving the purpose of updating the content on the virtualized input interface based on the input. For this purpose, the object may input confidential information such as a password and an account in the virtualized input interface. The cloud side obtains the confidential information inputted by the user by analyzing the operation event information, and verifies the confidential information to obtain a verification result of whether the confidential information is correct.

According to the method for processing information provided in this embodiment, it is possible to request the cloud side to allocate a virtualized instance when it is required to input private information such as a password at a PC or mobile phone side of the user. The cloud side allocates the corresponding virtualized instance according to the information verification request, and at the same time, the virtualized instance of the cloud side enters the corresponding input interface and returns the video stream of the instance to the client side.

After the client side presents the video, the user may input information in the virtualized input interface of the cloud side, and at the same time, the cloud side may match or verify the information inputted by the user after the user inputs the information. Since the request and interaction of the verification are performed at the cloud side, the risk of leak of secrets can be greatly reduced.

According to the method for processing information provided in this embodiment, first, the virtualized instance is allocated based on the received information verification request. Then, the initial video stream containing the virtualized input interface is generated in the virtualized instance based on the information verification request. Subsequently, the initial video stream is sent to the client side to display the virtualized input interface at the client side. Next, in response to receiving the operation event information being in the virtualized input interface and sent by the client side, the updated video stream is obtained based on the operation event information, and the updated video stream is sent to the client side. Finally, in response to determining that the operation event corresponding to the operation event information is completed, the operation event information is analyzed and verified to obtain the verification result. Accordingly, the interaction is performed with the client side in the form of a video stream, to receive the operation event information of the operation of the user on the virtualized input interface, and the operation event information is analyzed and verified, to complete the verification on the information inputted by the user. Thus, it can be ensured that the process of verifying the operation event information of the user can be completely performed at the cloud side, which improves the reliability of the input of the information of the user, and ensures the security of the verification on the information.

In some alternative implementations of this embodiment, the method for processing information includes: allocating the virtualized instance based on the received information verification request; generating the initial video stream containing the virtualized input interface in the virtualized instance based on the information verification request; recording a generation duration of the virtualized input interface; sending the initial video stream to the client side to display the virtualized input interface at the client side; detecting whether the operation event information being in the virtualized input interface and sent by the client side is received, in response to the generation duration being greater than a timeout threshold; obtaining, if the operation event information is detected, an updated video stream based on the operation event information, and sending the updated video stream to the client side; and analyzing and verifying, in response to determining that the operation event corresponding to the operation event information is completed, the operation event information to obtain a verification result.

In this embodiment, the timeout threshold may be an empirical value set based on a display requirement of the client side, for example, the timeout threshold is 50s.

In this embodiment, the generation duration of the virtualized input interface is the survival time of the virtualized input interface that is recorded in real time after the generation of the virtualized input interface. The lifetime of the virtualized input interface can be effectively measured through the generation duration.

Alternatively, the method further includes: releasing the virtualized instance if the operation event information is not detected.

In this embodiment, when the object does not operate on the virtualized input interface at all times (the generation duration of the virtualized input interface is greater than the timeout threshold), the virtualized instance is released, such that the virtualized instance and the virtualized input interface no longer occupy system resources, thereby improving the utilization rate of resource and ensuring the information processing efficiency.

Alternatively, after the verification result is obtained, the method for processing information further includes: zeroing the generation duration of the virtualized input interface.

Alternatively, after the initial video stream containing the virtualized input interface is generated in the virtualized instance, the method for processing information further includes: recording the generation duration of the virtualized input interface; detecting whether there is the operation event information being in the virtualized input interface and sent by the client side, in response to the generation duration being less than or equal to the timeout threshold; obtaining, if the operation event information being in the virtualized input interface and sent by the client side is detected, an updated video stream based on the operation event information, and sending the updated video stream to the client side; and analyzing and verifying, in response to determining that the operation event corresponding to the operation event information is completed, the operation event information to obtain a verification result. If the operation event information is not detected, the virtualized instance and the virtualized input interface are released when the generation duration is greater than the timeout threshold.

In some alternative implementations of this embodiment, the information verification request includes an interface identifier and interface prompt information. The generating the initial video stream containing the virtualized input interface in the virtualized instance based on the information verification request includes: determining a display type of the virtualized input interface based on the interface identifier; rendering and generating, in the virtualized instance, a virtualized input interface matching the display type and the interface prompt information; and performing video encoding on the virtualized input interface to obtain the initial video stream containing the virtualized input interface.

In this alternative implementation, when the information verification request is a request issued by an application or the like, the interface identifier in the information verification request may indicate an identifier of a current application, an access interface, or the like. For example, when the interface identifier indicates that the information verification request is issued by an application of the client side, the display type of the virtualized input interface may refer to an application interface type. When the interface identifier indicates that the information verification request is issued by a webpage, the display type of the virtualized input interface may refer to a webpage interface type. The interface prompt information in the information verification request can effectively instruct the operation of the object on the virtualized input interface.

In this alternative implementation, the display type of the virtualized input interface determined through the information verification request can be effectively adapted to the system of the issuing side of the information verification request, thereby improving the operation experience of the user.

Alternatively, the information verification request may further include an interface specification. The generating the initial video stream containing the virtualized input interface in the virtualized instance based on the information verification request further includes: rendering and generating, in the virtualized instance, a virtualized input interface matching the interface specification.

In this embodiment, the interface specification provided based on the information verification request may include a length, a width, a display pattern, and the like of the virtualized input interface. Through the interface specification, an alternative approach to displaying the appearance can be provided for the virtualized input interface.

In some alternative implementations of this embodiment, the operation event information includes a current position of an inputted text. Obtaining the updated video stream based on the operation event information and sending the updated video stream to the client side includes: adding a preset identifier to a corresponding position of the virtualized input interface based on the current position of the inputted text, to obtain a display interface; rendering and generating, in the virtualized instance, an interface update image corresponding to the display interface; performing video encoding on the interface update image to obtain the updated video stream; and sending the updated video stream to the client side.

In this alternative implementation, a plurality of input positions are preset in the virtualized input interface, and different information such as a text, a sound and an image can be inputted at the plurality of input positions. When the object performs a text input operation at the current input position of the virtualized input interface, the client side may collect the current position of the inputted text at the input position.

Alternatively, a text input area may also set on the virtualized input interface, and the text input area includes a plurality of input text positions. When the client side detects a text input operation of the object at any one of the input text positions in the text input area on the virtualized input interface, the current position of the inputted text is obtained.

In this alternative implementation, the current position of the inputted text in the operation text event information may be obtained by converting the operation of inputting the text into the text input area. In order to effectively prompt the input of the text and be compatible with the confidentiality of the text, the preset identifier is added to the corresponding position of the virtualized input interface, and the interface update image is generated, which can help the object view the operation on the virtualized input interface. In addition, the preset identifier is not the actual content inputted by the object, which provides a reliable display approach for the inputted information, thus reducing the risk of leak.

In some alternative implementations of this embodiment, the operation event information includes a text identifier and an input text position. The analyzing and verifying, in response to determining that the operation event corresponding to the operation event information is completed, the operation event information to obtain a verification result includes: detecting whether the input text position includes an end position based on the information verification request; determining, in response to detecting that the input text position includes the end position, that the operation event corresponding to the operation event information is completed; obtaining an analyzed text based on the text identifier, and obtaining a position of the analyzed text based on the input text position; and verifying the analyzed text and the position of the analyzed text to obtain the verification result.

In this alternative implementation, the text identifier is an identifier used to distinguish a different text, and the text refers to a text inputted by the object to the virtualized input interface. The content of the text inputted to the virtualized input interface can be determined through the text identifier. When performing an input operation of a plurality of texts on the virtualized input interface, the input text position may include sub-positions of the plurality of inputted text, the sub-position of each inputted text corresponding to one text.

In this alternative implementation, the analyzed text and the position of the analyzed text may be obtained by querying a preset analysis table, and the preset analysis table includes a corresponding relationship between a text identifier and an analyzed text. After the text identifier is obtained, the analyzed text corresponding to the text identifier can be obtained by querying the analysis table. The input text position corresponds to a position relationship between different text identifiers. Further, for each input text position and each analyzed text, the position of the each analyzed text may be determined. It should be noted that the position of the analyzed text refers to an actual sequential relationship between a plurality of analyzed texts. The sequential relationship may include a front-and-back relationship, a top-and-bottom relationship, and the like.

In this alternative implementation, based on the end position in the operation event information, it is determined that the operation event corresponding to the operation event information is completed, which can facilitate in providing a basis for the cloud to verify the information.

In some alternative implementations of this embodiment, the operation event information includes an input operation step of a text input event. Analyzing and verifying the operation event information to obtain the verification result includes: analyzing the input operation step to obtain an analyzed text; and verifying the analyzed text to obtain the verification result.

In this alternative implementation, the input operation step of the text input event refers to the input operation of the plurality of texts that is performed by the object on the virtualized input interface. By analyzing the operation event information including the input operation step of the text input event, all text input operations of the object on the virtualized input interface can be analyzed to obtain a relatively comprehensive analyzed text, which is conducive to obtaining a relatively accurate verification result.

In this embodiment, the analyzed text may include a text required to be verified by the cloud side and a text required to be verified by a third party. The text required to be verified by the third party may include data signature information. In some alternative implementations of this embodiment, the analyzed text further includes digital signature information. The verifying the analyzed text to obtain the verification result includes: sending the digital signature information to the third party, to cause the third party to verify the digital signature information to obtain the verification result.

In this alternative implementation, the digital signature information is a digit string that can only be generated by the sender (e.g., the third party in Fig. 2) of the information and cannot be forged by others. At the same time, this digit string is also a valid proof of the authenticity of the information sent by the sender of the information.

In this alternative implementation, after the authentication of the third party on the digital signature information passes, the verification result that the authentication on the digital signature information passes can be obtained. In addition, when the authentication of the third party on the digital signature information fails to pass, the verification result that the authentication on the digital signature information fails to pass can be obtained.

In this alternative implementation, when the analyzed text includes the digital signature information, the verification of the third party on the digital signature information can improve the reliability of the verification on the analyzed text.

Alternatively, the analyzed text includes a first text (distinguished by the text identifier) required to be verified by the cloud side. The verifying the analyzed text further includes: comparing, at the cloud side, the first text required to be verified by the cloud side with a preset text or a preset image. When the first text is equivalent to the preset text or the preset image, a verification result that the authentication on the first text passes is obtained. When the first text is not equivalent to the preset text or the preset image, a verification result that the authentication on the first text fails to pass is obtained.

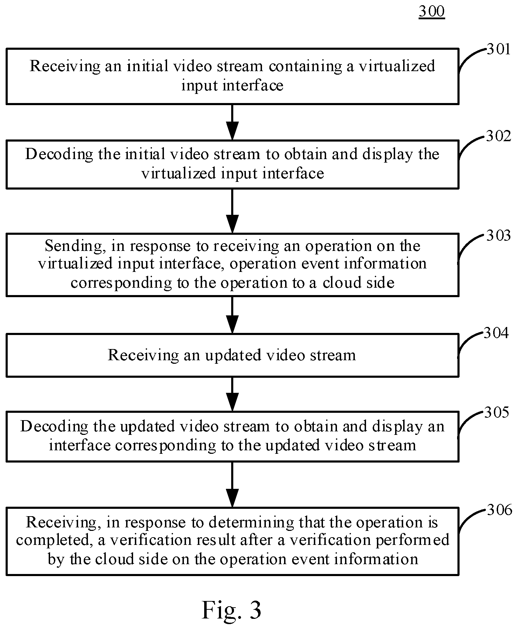

Fig. 3 illustrates a flow 300 of another embodiment of the method for processing information according to the present disclosure. The method for processing information includes the following steps:

Step 301, receiving an initial video stream containing a virtualized input interface.

In this embodiment, when having an information authentication requirement (e.g., a password authentication, an authentication code verification and an image verification), an executing body on which the method for processing information runs may send an information authentication request to a cloud side, and the virtualized input interface is an interface generated based on the information authentication request.

The executing body on which the method for processing information provided in this embodiment runs may be a client side as shown in Fig. 2. The client side includes a video player and an input forwarding module. Here, the video player is configured to receive the initial video stream containing the virtualized input interface. In this embodiment, the client side is a terminal distinguished from a cloud terminal. The cloud terminal refers to a terminal device of a cloud desktop technology, and the client side is a terminal communicating with a traditional server via the Internet or the like.

Step 302, decoding the initial video stream to obtain and display the virtualized input interface.

In this embodiment, the cloud side performs image rendering and processing on the information related to a virtualized instance, to obtain the initial video stream. The executing body on which the method for processing information runs decodes the initial video stream, and presents the virtualized input interface. At this time, an object may remotely operate on the virtualized input interface through the client side.

It should be noted that the object in the present disclosure may include at least one user, and the user may perform an operation on the virtualized input interface displayed on the client side.

Step 303, sending, in response to receiving an operation on the virtualized input interface, operation event information corresponding to the operation to a cloud side.

In this embodiment, the object may perform operations such as control controlling, information inputting and interface beautifying on the virtualized input interface.

In this embodiment, as shown in Fig. 2, the client side converts the operation of the object on the virtualized input interface into the operation event information through the input forwarding module, and forwards the operation event information to the cloud side, thereby realizing the remote operation of the object on the virtualized input interface.

Step 304, receiving an updated video stream.

In this embodiment, as shown in Fig. 2, the video player is configured to receive the updated video stream.

Step 305, decoding the updated video stream to obtain and display an interface corresponding to an updated video stream.

Step 306, receiving, in response to determining that the operation is completed, a verification result after a verification performed by the cloud side on the operation event information.

It should be noted that, for the process in which the cloud side verifies the operation event information, reference may be made to the embodiment shown in Fig. 1.

According to the method for processing information provided in this embodiment, the initial video stream containing the virtualized input interface is received in real time. When the operation on the virtualized input interface is received, the operation event information is sent to the cloud side. The updated video stream and the verification result after the verification performed by the cloud side on the operation event information are received. The virtualized input interface of the cloud side can be played for the object in real time, and the operation of the object on the virtualized input interface can be converted into the operation event information corresponding to the operation. Accordingly, it is ensured that the inputted information for the virtualized input interface can be verified on the cloud side, thus ensuring the reliability of the data verification.

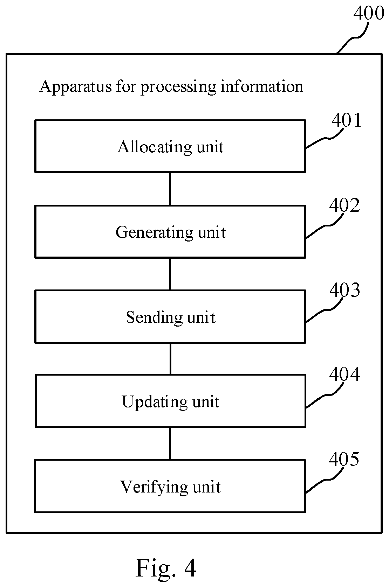

Further referring to Fig. 4, as an implementation of the method shown in the above drawing, the present disclosure provides an embodiment of an apparatus for processing information. The embodiment of the apparatus corresponds to the embodiment of the method shown in Fig. 1.

As shown in Fig. 4, an apparatus 400 for processing information provided in this embodiment includes: an allocating unit 401, a generating unit 402, a sending unit 403, an updating unit 404 and a verifying unit 405. Here, the allocating unit 401 may be configured to allocate a virtualized instance based on a received information verification request. The generating unit 402 may be configured to generate an initial video stream containing a virtualized input interface in the virtualized instance based on the information verification request. The sending unit 403 may be configured to send the initial video stream to a client side to display the virtualized input interface at the client side. The updating unit 404 may be configured to obtain, in response to receiving operation event information being in the virtualized input interface and sent by the client side, an updated video stream based on the operation event information, and send the updated video stream to the client side. The verifying unit 405 may be configured to analyze and verify, in response to determining that an operation event corresponding to the operation event information is completed, the operation event information to obtain a verification result.

In this embodiment, for specific processes of the allocating unit 401, the generating unit 402, the sending unit 403, the updating unit 404 and the verifying unit 405 in the apparatus 400 for processing information, and their technical effects, reference may be respectively made to relative descriptions of step 101, step 102, step 103, step 104 and step 105 in the corresponding embodiment of Fig. 1, and thus the specific processes and the technical effects will not be repeated here.

In some alternative implementations of this embodiment, the apparatus 400 further includes a recording unit (not shown) and a releasing unit (not shown). Here, the recording unit may be configured to record a generation duration of the virtualized input interface. The releasing unit may be configured to release, in response to the generation duration being greater than a timeout threshold and in response to the operation event information not being received during the generation duration, the virtualized instance.

In some alternative implementations of this embodiment, the information verification request includes an interface identifier and interface prompt information. The generating unit 402 includes: a determining module (not shown), a rendering module (not shown) and an obtaining module (not shown). Here, the determining module may be configured to determine a display type of the virtualized input interface based on the interface identifier. The rendering module may be configured to render and generate, in the virtualized instance, a virtualized input interface matching the display type and the interface prompt information. The obtaining module may be configured to perform video encoding on the virtualized input interface to obtain the initial video stream containing the virtualized input interface.

In some alternative implementations of this embodiment, the operation event information includes a current position of an inputted text. The updating unit 404 includes: an adding module (not shown), an updating module (not shown), an encoding module (not shown) and a sending module (not shown). The adding module may be configured to add a preset identifier to a corresponding position of the virtualized input interface based on the current position of the inputted text, to obtain a display interface. The updating module may be configured to render and generate, in the virtualized instance, an interface update image corresponding to the display interface. The encoding module may be configured to perform video encoding on the interface update image to obtain the updated video stream. The sending module may be configured to send the updated video stream to the client side.

In some alternative implementations of this embodiment, the operation event information includes an input operation step of a text input event. The verifying unit 405 includes: an analyzing module (not shown) and a verifying module (not shown). Here, the analyzing module may be configured to analyze the input operation step to obtain an analyzed text. The verifying module may be configured to verify the analyzed text to obtain the verification result.

In some alternative implementations of this embodiment, the analyzed text includes digital signature information. The verifying module is further configured to: send the digital signature information to a third party, to cause the third party to verify the digital signature information to obtain the verification result.

According to the apparatus for processing information provided in the embodiment of the present disclosure, first, the allocating unit 401 allocates the virtualized instance based on the received information verification request. Then, the generating unit 402 generates the initial video stream containing the virtualized input interface in the virtualized instance based on the information verification request. Subsequently, the sending unit 403 sends the initial video stream to the client side to display the virtualized input interface at the client side. Next, in response to receiving the operation event information being in the virtualized input interface and sent by the client side, the updating unit obtains the updated video stream based on the operation event information, and sends the updated video stream to the client side. Finally, in response to determining that the operation event corresponding to the operation event information is completed, the verifying unit 405 analyzes and verifies the operation event information to obtain the verification result. Accordingly, the interaction is performed with the client side in the form of a video stream, to receive the operation event information of the operation of the user on the virtualized input interface, and the operation event information is analyzed and verified, to complete the verification on the information inputted by the user. Thus, it can be ensured that the process of verifying the operation event information of the user can be completely performed at the cloud side, which improves the reliability of the input of the information of the user, and ensures the security of the verification on the information.

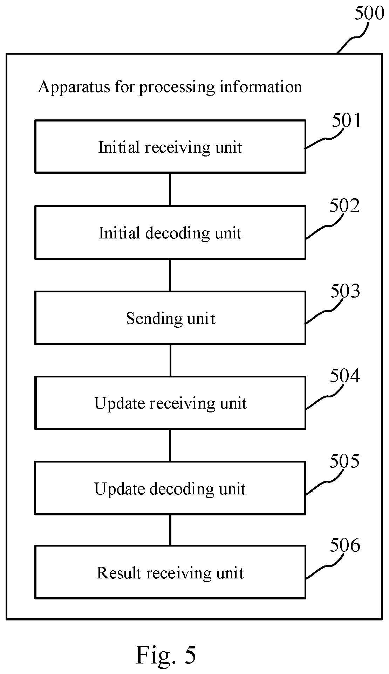

Further referring to Fig. 5, as an implementation of the method shown in the above drawing, the present disclosure provides an embodiment of an apparatus for processing information. The embodiment of the apparatus corresponds to the embodiment of the method shown in Fig. 3.

As shown in Fig. 5, an apparatus 500 for processing information provided in this embodiment includes: an initial receiving unit 501, an initial decoding unit 502, a sending unit 503, an update receiving unit 504, an update decoding unit 505 and a result receiving unit 506. Here, the initial receiving unit 501 is configured to receive an initial video stream containing a virtualized input interface. The initial decoding unit 502 is configured to decode the initial video stream to obtain and display the virtualized input interface. The sending unit 503 is configured to send, in response to receiving an operation on the virtualized input interface, operation event information corresponding to the operation to a cloud side. The update receiving unit 504 is configured to receive an updated video stream. The update decoding unit 505 is configured to decode the updated video stream to obtain and display an interface corresponding to the updated video stream. The result receiving unit 506 is configured to receive, in response to determining that the operation is completed, a verification result after a verification performed by the cloud side on the operation event information.

In this embodiment, for specific processes of the initial receiving unit 501, the initial decoding unit 502, the sending unit 503, the update receiving unit 504, the update decoding unit 505 and the result receiving unit 506 in the apparatus 500 for processing information, and their technical effects, reference may be respectively made to relative descriptions of step 301, step 302, step 303, step 304, step 305 and step 306 in the corresponding embodiment of Fig. 3, and thus the specific processes and the technical effects will not be repeated here.

In the technical solution of the present disclosure, the collection, storage, use, processing, transmission, provision, disclosure, etc. of the personal information of a user all comply with the provisions of the relevant laws and regulations, and do not violate public order and good customs.

According to an embodiment of the present disclosure, the present disclosure further provides an electronic device, a readable storage medium and a computer program product.

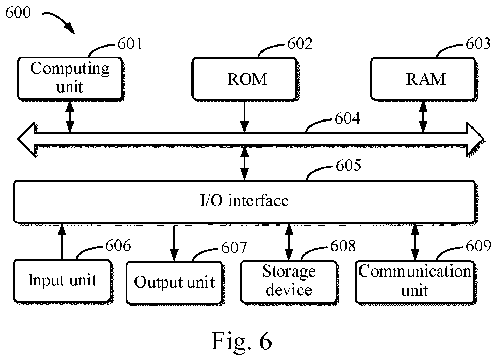

Fig. 6 is a schematic block diagram of an example electronic device 600 that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the device 600 includes a computation unit 601, which may execute various appropriate actions and processes in accordance with a computer program stored in a read-only memory (ROM) 602 or a computer program loaded into a random access memory (RAM) 603 from a storage unit 608. The RAM 603 also stores various programs and data required by operations of the device 600. The computation unit 601, the ROM 602 and the RAM 603 are connected to each other through a bus 604. An input/output (I/O) interface 605 is also connected to the bus 604.

The following components in the device 600 are connected to the I/O interface 605: an input unit 606, for example, a keyboard and a mouse; an output unit 607, for example, various types of displays and a speaker; a storage device 608, for example, a magnetic disk and an optical disk; and a communication unit 609, for example, a network card, a modem, a wireless communication transceiver. The communication unit 609 allows the device 600 to exchange information/data with an other device through a computer network such as the Internet and/or various telecommunication networks.

The computation unit 601 may be various general-purpose and/or special-purpose processing assemblies having processing and computing capabilities. Some examples of the computation unit 601 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 601 performs the various methods and processes described above, for example, the method for processing information. For example, in some embodiments, the method for processing information may be implemented as a computer software program, which is tangibly included in a machine readable medium, for example, the storage device 608. In some embodiments, part or all of the computer program may be loaded into and/or installed on the device 600 via the ROM 602 and/or the communication unit 609. When the computer program is loaded into the RAM 603 and executed by the computation unit 601, one or more steps of the above method for processing information may be performed. Alternatively, in other embodiments, the computation unit 601 may be configured to perform the method for processing information through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable information processing apparatus or information processing system, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for processing information, comprising:
allocating (101) a virtualized instance based on a received information verification request;
generating (102) an initial video stream containing a virtualized input interface in the virtualized instance based on the information verification request;
sending (103) the initial video stream to a client side to display the virtualized input interface at the client side;
obtaining (104), in response to receiving operation event information being in the virtualized input interface and sent by the client side, an updated video stream based on the operation event information, and sending the updated video stream to the client side; and
analyzing and verifying (105), in response to determining that an operation event corresponding to the operation event information is completed, the operation event information to obtain a verification result.

2. The method according to claim 1, further comprising:
recording a generation duration of the virtualized input interface; and
releasing, in response to the generation duration being greater than a timeout threshold and in response to the operation event information not being received during the generation duration, the virtualized instance.

3. The method according to any one of claims 1-2, wherein the information verification request comprises an interface identifier and interface prompt information, and the generating (102) an initial video stream containing a virtualized input interface in the virtualized instance based on the information verification request comprises:
determining a display type of the virtualized input interface based on the interface identifier;
rendering and generating, in the virtualized instance, a virtualized input interface matching the display type and the interface prompt information; and
performing video encoding on the virtualized input interface to obtain the initial video stream containing the virtualized input interface.

4. The method according to any one of claims 1-3, wherein the operation event information comprises a current position of an inputted text, and obtaining (104) the updated video stream based on the operation event information and sending the updated video stream to the client side comprises:
adding a preset identifier to a corresponding position of the virtualized input interface based on the current position of the inputted text, to obtain a display interface;
rendering and generating, in the virtualized instance, an interface update image corresponding to the display interface;
performing video encoding on the interface update image to obtain the updated video stream; and
sending the updated video stream to the client side.

5. The method according to any one of claims 1-4, wherein the operation event information comprises an input operation step of a text input event, and analyzing and verifying (105) the operation event information to obtain the verification result comprises:
analyzing the input operation step to obtain an analyzed text; and
verifying the analyzed text to obtain the verification result.

6. The method according to claim 5, wherein the analyzed text comprises digital signature information, and the verifying the analyzed text to obtain the verification result comprises:
sending the digital signature information to a third party, to cause the third party to verify the digital signature information to obtain the verification result.

7. A method for processing information, comprising:
receiving (301) an initial video stream containing a virtualized input interface;
decoding (302) the initial video stream to obtain and display the virtualized input interface;
sending (303), in response to receiving an operation on the virtualized input interface, operation event information corresponding to the operation to a cloud side;
receiving (304) an updated video stream;
decoding (305) the updated video stream to obtain and display an interface corresponding to the updated video stream; and
receiving (306), in response to determining that the operation is completed, a verification result after a verification performed by the cloud side on the operation event information.

8. An apparatus for processing information, comprising:
an allocating unit (401), configured to allocate a virtualized instance based on a received information verification request;
a generating unit (402), configured to generate an initial video stream containing a virtualized input interface in the virtualized instance based on the information verification request;
a sending unit (403), configured to send the initial video stream to a client side to display the virtualized input interface at the client side;
an updating unit (404), configured to obtain, in response to receiving operation event information being in the virtualized input interface and sent by the client side, an updated video stream based on the operation event information, and send the updated video stream to the client side; and
a verifying unit (405), configured to analyze and verify, in response to determining that an operation event corresponding to the operation event information is completed, the operation event information to obtain a verification result.

9. The apparatus according to claim 8, further comprising:
a recording unit, configured to record a generation duration of the virtualized input interface; and
a releasing unit, configured to release, in response to the generation duration being greater than a timeout threshold and in response to the operation event information not being received during the generation duration, the virtualized instance.

10. The apparatus according to any one of claims 8-9, wherein the information verification request comprises an interface identifier and interface prompt information, and the generating unit (402) comprises:
a determining module, configured to determine a display type of the virtualized input interface based on the interface identifier;
a rendering module, configured to render and generate, in the virtualized instance, a virtualized input interface matching the display type and the interface prompt information; and
an obtaining module, configured to perform video encoding on the virtualized input interface to obtain the initial video stream containing the virtualized input interface.

11. The apparatus according to any one of claims 8-10, wherein the operation event information comprises a current position of an inputted text, and the updating unit (404) comprises:
an adding module, configured to add a preset identifier to a corresponding position of the virtualized input interface based on the current position of the inputted text, to obtain a display interface;
an updating module, configured to render and generate, in the virtualized instance, an interface update image corresponding to the display interface;
an encoding module, configured to perform video encoding on the interface update image to obtain the updated video stream; and
a sending module, configured to send the updated video stream to the client side.

12. An apparatus for processing information, comprising:
an initial receiving unit (501), configured to receive an initial video stream containing a virtualized input interface;
an initial decoding unit (502), configured to decode the initial video stream to obtain and display the virtualized input interface;
a sending unit (503), configured to send, in response to receiving an operation on the virtualized input interface, operation event information corresponding to the operation to a cloud side;
an update receiving unit (504), configured to receive an updated video stream;
an update decoding unit (505), configured to decode the updated video stream to obtain and display an interface corresponding to the updated video stream; and
a result receiving unit (506), configured to receive, in response to determining that the operation is completed, a verification result after a verification performed by the cloud side on the operation event information.

13. An electronic device, comprising:
at least one processor; and
a storage device, communicated with the at least one processor,
wherein the storage device stores an instruction executable by the at least one processor, and the instruction is executed by the at least one processor, to enable the at least one processor to perform the method according to any one of claims 1-7.

14. A non-transitory computer readable storage medium, storing a computer instruction, wherein the computer instruction is used to cause a computer to perform the method according to any one of claims 1-7.

15. A computer program product, comprising a computer program, wherein the computer program, when executed by a processor, implements the method according to any one of claims 1-7.
